# EUROPEAN PATENT SPECIFICATION

(11) **EP 3 369 340 B1**
(45) Date of publication and mention of the grant of the patent: **13.11.2019**
(21) Application number: 17020562.9
(22) Date of filing: 07.12.2017
(51) Int. Cl.: A47B 9/08, A47B 9/02, A47B 9/14, A47B 9/20

(54) **AN ADJUSTABLE LEG, AND AN ARTICLE WITH AN ADJUSTABLE LEG**
VERSTELLBARES BEIN UND ARTIKEL MIT EINEM VERSTELLBAREN BEIN
PIED RÉGLABLE ET ARTICLE DOTÉ D'UN PIED RÉGLABLE

(30) Priority: 01.03.2017 GB 201703333
(43) Date of publication of application: 05.09.2018
(73) Proprietor: Fox International Group Limited, Warley Brentwood CM14 5EG (GB)
(72) Inventor: Brindle, Kyle, London N13 4HP (GB)
(74) Representative: Crouch, David John

(56) References cited:
- WO-A1-85/03746
- WO-A1-03/010439
- DE-A1- 3 620 520
- US-A- 836 303
- US-A- 3 307 820
- US-A- 3 737 136

## Description

The present invention relates to an adjustable leg comprising inner and outer leg parts the inner leg part of which is slidable within the outer leg part to enable the leg to be telescopically adjustable in length, there being a locking member provided with an aperture through which the inner leg part passes, which locking member is held directly or indirectly on the outer leg part and is resiliently urged to adopt an angle with regard to the inner leg part so that edge portions defining the aperture engage the inner leg part and hold it in position relative to the outer leg part.

This enables the inner leg to be locked into position, with a desired overall length of the telescopically adjustable leg, to enable the leg to accommodate uneven ground.

The present invention also relates to a chair, a bedchair, a wheelbarrow, a table, a container, a trolley or other article having at least one such adjustable leg.

One such adjustable leg is described and illustrated in GB 2318505 A.

Another is described and illustrated in US3307820A, in which a lifting ring and a locking ring work together to raise a cylindrical tube of a chair lifting mechanism.

A problem encountered with a telescopically adjustable leg made in accordance with the opening paragraph of the present specification is that forces and jolts acting on the inner leg part which tend to extend it relative to the outer leg part when the leg or article of which it is a part is being stowed away or is already stowed away, may overcome such resistance as the locking member may provide against such extension, with the result that the leg or article becomes cumbersome, or the inner leg part of the or a leg may fall out of the outer leg part entirely, and may even be lost as a result.

The present invention seeks to overcome one or more of the foregoing disadvantages.

Accordingly, the present invention is directed to an adjustable leg having the construction set out in the opening paragraph of the present specification, in which the adjustable leg is provided with a second locking member which is moveable into and out of engagement with the said inner leg part, the first-mentioned locking member and the second locking member being provided with mutually engageable portions by which movement of the first-mentioned locking member out of engagement with the inner leg part causes movement of the second locking member out of engagement with the said inner leg part, **characterised in that** the inner leg part is provided with an engagement portion to facilitate engagement between the second locking member and the inner leg part, said engagement portion comprises an aperture or recess which receives an end portion of the second locking member when the latter is in engagement with the inner leg part.

Such a construction provides the advantage that it may be operable with one hand of the user, and provides an especially sturdy construction by which the inner leg is held in its retracted condition.

The second locking member may be resiliently urged into engagement with the inner leg part.

This may provide the advantage that movement of the first-mentioned locking member moves the second locking member out of engagement with the inner leg part, and movement of the first-mentioned locking member in the opposite direction moves the second locking member into engagement with the inner leg part.

It may be thus resiliently urged by a compression spring.

This may provide a relatively constant restoring force over a given distance of movement.

The compression spring which thus urges the second locking member may be housed within a housing which also houses at least a part of the first-mentioned locking member.

This provides protection for the moving parts against ingress of dirt.

One or both of the said mutually engageable portions may be provided with a cam to effect such disengagement.

This provides a relatively inexpensive construction to enable such disengagement.

The said engagement portion may be at an end of the available travel of the inner leg part relative to the second locking member.

As a result, the inner leg part may be more positively held in its retracted condition.

A longitudinally oriented compression spring may be arranged within the said outer leg part so that it engages the said inner leg part so as to urge the latter in a direction tending to increase the length of the telescopically adjustable leg.

This reduces the likelihood of the leg jamming.

The present invention extends to a chair, a bedchair, a wheelbarrow, a table, a container, a trolley or other article having at least one adjustable leg in accordance with the present invention.

An example of an adjustable leg, and a chair having an adjustable leg, in accordance with the present invention will now be described in greater detail with reference to the accompanying drawings, in which:
Figure 1 shows an axial section of a leg embodying the present invention, with an inner leg part thereof in a fully retracted condition;
Figure 2 shows on a larger scale a part perspective part axial section of parts of the leg shown in Figure 1, with an inner leg part thereof in a fully retracted condition;
Figure 3 shows, on the scale of Figure 1, an axial section of the leg shown in Figures 1 and 2, with an inner leg part thereof in an extended condition;
Figure 4 shows on a larger scale a part perspective part axial section of parts of the leg shown in Figures 1 to 3, with an inner leg part thereof in an extended condition; and
Figure 5 shows on a smaller scale in perspective parts of a chair having adjustable legs each as shown in Figures 1 to 4.

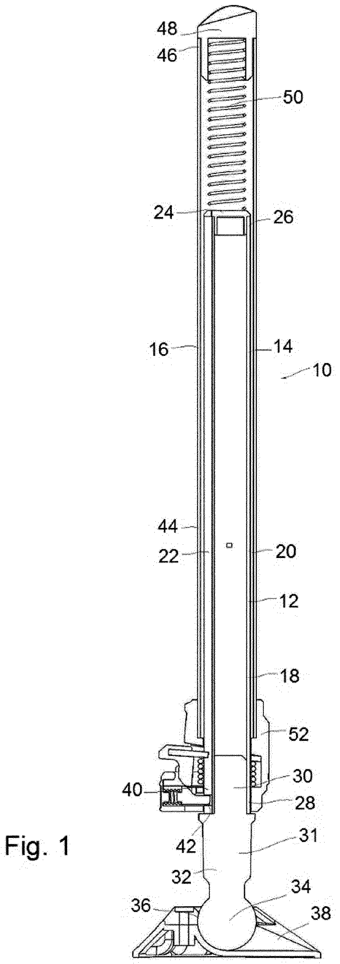

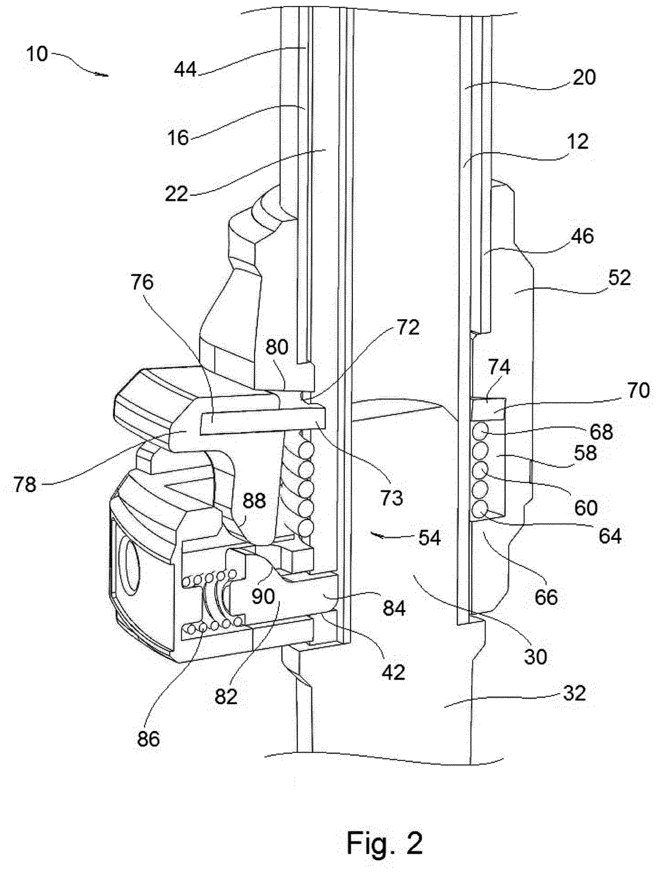

The adjustable leg 10 shown in Figures 1 to 4 comprises an elongate inner leg part 12 a length 14 of which extends within an outer leg part 16, the inner leg part 12 being slidable relative to the outer leg part 16 so that the leg 10 as a whole is telescopically adjustable in length.

The inner leg part 12 comprises a length 18 of cylindrical aluminium tubing 20 of substantially uniform cross-section. Along one side thereof there is a longitudinal recess 22. A plastics end-piece 24 forms a tight fit with an intended upper end 26 of the inner leg part 12, to close off that end.

The intended lower end 28 of the tubing 20 receives as a tight fit and closure a spigot 30 of a foot 31 of the inner leg part 12, the foot 31 also comprising a short extension 32, terminated by the ball 34 of a ball and socket joint 36 between the foot 31 and a foot pad 38.

The lower end 40 of the recess 22 is formed with an aperture 42.

The outer leg part 16 comprises a length of cylindrical aluminium tubing 44 of sufficient internal diameter to accommodate the inner leg part 12 sufficiently to enable the latter to slide within in it but sufficiently tightly to ensure the inner and outer leg parts 12 and 16 remain co-linear.

The upper end 46 of the tubing 44 is closed with a plastics end-piece 48, and an elongate compression spring 50 extends between and abuts against an underside of the end-piece 48 and the upper side of the end-piece 24, so as to urge the inner leg 12 downwardly relative to the outer lag part 16, so that it tends to increase the length of the telescopically adjustable leg 10.

A plastics housing 52 accommodating a locking mechanism 54 is secured to the lower end 56 of the aluminium tubing 44 of the outer leg part 16. The inner leg part 12 extends through the housing 52. The housing 52 is formed with a cavity 58 within which extends a compression spring 60. This compression spring 60 surrounds a portion of the inner leg part 12, has its lower end 64 seated on the base 66 of the housing 52, and its upper end 68 in abutment with the lower side of a first locking member 70. The latter is in the form of a plate 70 having an aperture 72 through which extends the inner leg part 12. The plate 70 has one end 74 engaging a corner of the cavity 58 on one side of the leg 10, and slants upwardly therefrom to its other end 76 which is provided with a thumb-push 78. As a result of the slant in the plate 40, inner edges of its aperture 72 dig into the aluminium tubing 20 of the inner leg part 12. The upper wall 80 of the cavity 58 also slants to accommodate such a slant in the plate 40.

A tongue 73 integral with and extending inwardly from an inner edge of the plate 70, which inner edge defines one side of the aperture 72, engages the longitudinal recess 22 so as to inhibit rotation of the inner leg part 12 relative to the outer leg part 16 without inhibiting relative longitudinal movement therebetween.

A second locking member 82 is retained within the housing 52. It has an inner end 84 received in the aperture 42. It is slidable out of engagement with the aperture 42 against the force of a return spring 86 in the form of a compression spring 86 housed within the housing 52.

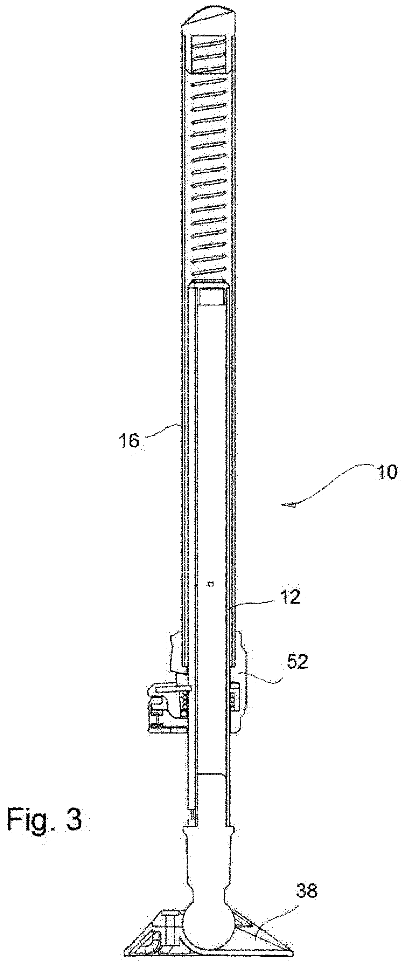

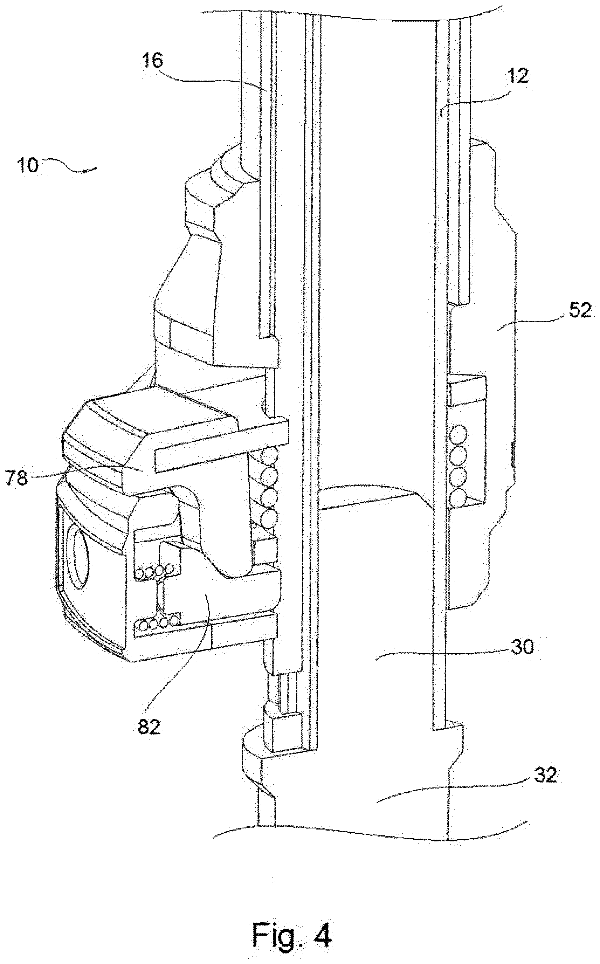

The thumb-push 78 and the second locking member 82 are provided with respective slanting cam surfaces 88 and 90, such that when the thumb-push 78 is depressed by the user's thumb (not shown), not only is the first locking member 70 brought substantially at right angles to the inner leg part 12, but also the cam surfaces 88 and 90 engage one another so that the second locking member 82 is urged away from the inner leg part 12 and out of engagement with the aperture 42 against the force of the restoring spring 86. The inner leg part 12 is now free to slide within the outer leg part 16, downwardly under the forces of gravity and the compression spring 50 to an extended condition as shown in Figures 3 and 4.

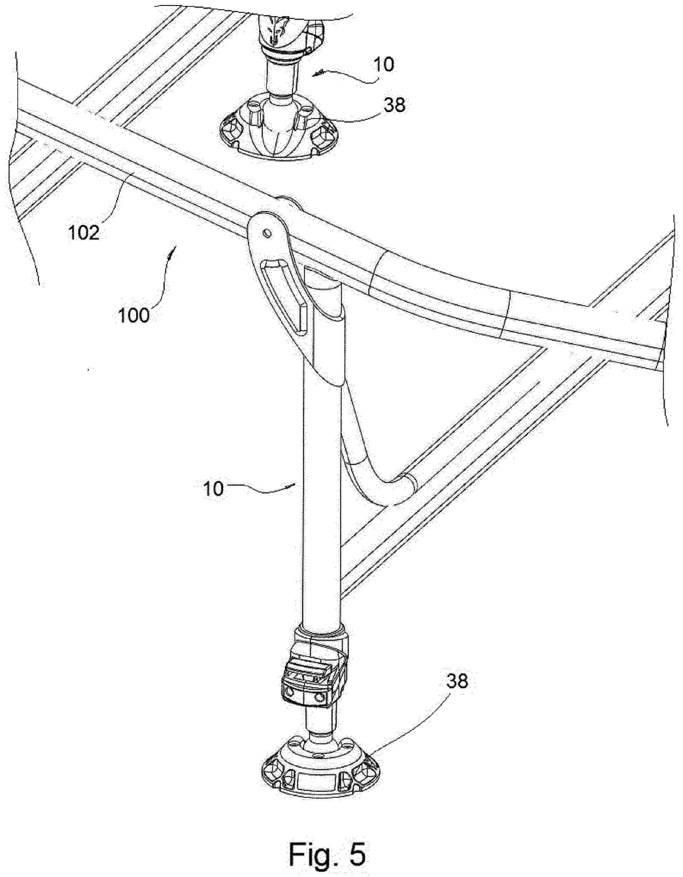

The chair 100 parts of which are shown in Figure 5 has a seat part 102 and four legs each as shown in Figures 1 to 4 (but only one of which is fully shown in Figure 5, parts of a second also being visible), so that the legs may be adjusted in length and the seat of the chair made horizontal regardless of how uneven the ground is. The fact that each foot pad 38 is swivellable by virtue of it being attached to the inner leg part 12 by a ball and socket joint facilitates uneven slope on the ground as well as uneven level, and also provides resistance to sinking in soft ground.

When the chair 100 is prepared for use on uneven ground, the chair 100 may be held with its seat part 102 horizontal over the ground where the chair is to be situated, and the thumb-push 78 of each adjustable leg 10 depressed in turn with the user only needing one hand to do this, so that the foot pad 38 of the inner leg 12 of each leg 10 in turn drops to the ground. Subsequent release of the thumb-push 78 locks the leg at that length notwithstanding the weight of the user when he or she sits in the chair 100.

When the chair 100 is folded up for stowage, each thumb-push 78 may be depressed in turn, with sufficient force acting on the leg 10 to urge the inner leg part 12 to be retracted into the outer leg part 16 until the inner end 84 of the second locking member 82 is in registration with the aperture 42, whereupon the thumb-push 78 is released and the inner leg part 12 is held in its fully retracted condition.

Numerous modification and variations to the illustrated adjustable leg and chair may occur to the reader without taking the resulting construction outside the scope of the present invention as defined by the appended claims. To give one example, the foot pad or pads 38 may be omitted if the leg or chair is not to be used on soft ground. Instead of the illustrated chair 100, the leg or legs each as shown in Figures 1 to 4 could be used on a bedchair, a wheelbarrow, a table, a container, a trolley or other article.

## Claims

1. An adjustable leg (10) comprising inner and outer leg parts (12 and 16) the inner leg part (12) of which is slidable within the outer leg part (16) to enable the leg to be telescopically adjustable in length, there being a locking member (70) provided with an aperture (72) through which the inner leg part (12) passes, which locking member (70) is held directly or indirectly on the outer leg part (16) and is resiliently urged to adopt an angle with regard to the inner leg part (12) so that edge portions defining the aperture (72) engage the inner leg part (12) and hold it in position relative to the outer leg part (16), in which the adjustable leg (10) is provided with a second locking member (82) which is moveable into and out of engagement with the said inner leg part (12), the first-mentioned locking member (70) and the second locking member (82) being provided with mutually engageable portions by which movement of the first-mentioned locking member (70) out of engagement with the inner leg part (12) causes movement of the second locking member (82) out of engagement with the said inner leg part (12), **characterised in that** the inner leg part (12) is provided with an engagement portion to facilitate engagement between the second locking member (82) and the inner leg part (12), said engagement portion comprises an aperture or recess (42) which receives an end portion (84) of the second locking member (82) when the latter is in engagement with the inner leg part (12).

2. An adjustable leg (10) according to claim 1, **characterised in that** the second locking member (82) is resiliently urged into engagement with the inner leg part (12) .

3. An adjustable leg (10) according to claim 2, **characterised in that** the second locking member (82) is resiliently urged into engagement with the inner leg part (12) by a compression spring (86).

4. An adjustable leg (10) according to claim 3, **characterised in that** the compression spring (86) which urges the second locking member (82) into engagement with the inner leg part (12) is housed within a housing (52) which also houses at least a part of the first-mentioned locking member (70).

5. An adjustable leg (10) according to anypreceding claim, **characterised in that** one or both of the said mutually engageable portions are provided with a cam (88 or 90) to effect such disengagement.

6. An adjustable leg (10) according to any preceding claim, **characterised in that** the said engagement portion is at an end of the available travel of the inner leg part (12) relative to the second locking member (82).

7. An adjustable leg (10) according to any preceding claim, **characterised in that** a longitudinally oriented compression spring (50) is arranged within the said outer leg part (16) and engages the said inner leg part (12) so as to urge the latter in a direction tending to increase the length of the telescopically adjustable leg (10).

8. An article comprising a chair, a bedchair, a wheelbarrow, a table, a container, a trolley or other article having at least one adjustable leg (10) as claimed in any preceding claim.

## Patentansprüche

1. Verstellbares Bein (10), das innere und äußere Beinteile (12 und 16) umfasst, von denen das innere Beinteil (12) innerhalb des äußeren Beinteils (16) verschiebbar ist, um zu ermöglichen, dass das Bein in der Länge teleskopisch verstellbar ist, wobei ein Verriegelungselement (70) vorhanden ist, das mit einer Öffnung (72) versehen ist, durch die das innere Beinteil (12) hindurchführt, wobei das Verriegelungselement (70) direkt oder indirekt am äußeren Beinteil (16) gehalten und elastisch gedrückt wird, um einen Winkel in Bezug auf das innere Beinteil (12) einzunehmen, so dass Kantenabschnitte, die die Öffnung (72) definieren, in Eingriff mit dem inneren Beinteil (12) kommen und es relativ zum äußeren Beinteil (16) in Position halten, wobei das verstellbare Bein (10) mit einem zweiten Verriegelungselement (82) versehen ist, das in den und aus dem Eingriff mit dem inneren Beinteil (12) bewegt werden kann, wobei das erstgenannte Verriegelungselement (70) und das zweite Verriegelungselement (82) mit miteinander in Eingriff bringbaren Abschnitten versehen sind, durch die eine Bewegung des erstgenannten Verriegelungselements (70) aus dem Eingriff mit dem inneren Beinteil (12) eine Bewegung des zweiten Verriegelungselements (82) aus dem Eingriff mit dem inneren Beinteil (12) bewirkt, **dadurch gekennzeichnet, dass** das innere Beinteil (12) mit einem Eingriffsabschnitt versehen ist, um den Eingriff zwischen dem zweiten Verriegelungselement (82) und dem inneren Beinteil (12) zu erleichtern, wobei der Eingriffsabschnitt eine Öffnung oder Aussparung (42) umfasst, die einen Endabschnitt (84) des zweiten Verriegelungselements (82) aufnimmt, wenn dieses mit dem inneren Beinteil (12) im Eingriff steht.

2. Verstellbares Bein (10) nach Anspruch 1, **dadurch gekennzeichnet, dass** das zweite Verriegelungselement (82) elastisch in Eingriff mit dem inneren Beinteil (12) gedrückt wird.

3. Verstellbares Bein (10) nach Anspruch 2, **dadurch gekennzeichnet, dass** das zweite Verriegelungselement (82) durch eine Druckfeder (86) elastisch in Eingriff mit dem inneren Beinteil (12) gedrückt wird.

4. Verstellbares Bein (10) nach Anspruch 3, **dadurch gekennzeichnet, dass** die Druckfeder (86), die das zweite Verriegelungselement (82) in Eingriff mit dem inneren Beinteil (12) drückt, in einem Gehäuse (52) untergebracht ist, das auch wenigstens einen Teil des erstgenannten Verriegelungselements (70) aufnimmt.

5. Verstellbares Bein (10) nach einem der vorstehenden Ansprüche, **dadurch gekennzeichnet, dass** einer oder beide der miteinander in Eingriff bringbaren Abschnitte mit einem Nocken (88 oder 90) versehen sind, um ein solches Außer-Eingriff-Bringen herbeizuführen.

6. Verstellbares Bein (10) nach einem der vorstehenden Ansprüche, **dadurch gekennzeichnet, dass** sich der Eingriffsabschnitt an einem Ende des verfügbaren Verfahrweges des inneren Beinteils (12) relativ zum zweiten Verriegelungselement (82) befindet.

7. Verstellbares Bein (10) nach einem der vorstehenden Ansprüche, **dadurch gekennzeichnet, dass** innerhalb des äußeren Beinteils (16) eine in Längsrichtung ausgerichtete Druckfeder (50) angeordnet ist und mit dem inneren Beinteil (12) in Eingriff kommt, um dieses in eine Richtung zu drücken mit der Tendenz, die Länge des teleskopisch verstellbaren Beins (10) zu vergrößern.

8. Gegenstand, der einen Stuhl, eine Liege, eine Schubkarre, einen Tisch, einen Behälter, einen Trolley oder einen anderen Gegenstand mit wenigstens einem verstellbaren Bein (10) gemäß einem der vorstehenden Ansprüche umfasst.

## Revendications

1. Pied réglable (10) comprenant des éléments de pied intérieur et extérieur (12 et 16), dont l'élément intérieur (12) peut coulisser dans l'élément extérieur (16) pour permettre de régler de façon télescopique le pied en longueur, un élément de verrouillage (70) étant doté d'une ouverture (72) à travers laquelle passe l'élément de pied intérieur (12), lequel élément de verrouillage (70) est maintenu directement ou indirectement sur l'élément de pied extérieur (16) et est mû de façon élastique pour former un angle avec l'élément de pied intérieur (12), de sorte que des parties périphériques définissant l'ouverture (72) entrent en prise avec l'élément de pied intérieur (12) et le maintiennent en position par rapport à l'élément de pied extérieur (16), le pied réglable (10) étant doté d'un second élément de verrouillage (82) qui peut se mettre en prise et hors de prise avec ledit élément de pied intérieur (12), le premier élément de verrouillage (70) et le second élément de verrouillage (82) étant dotés de parties pouvant entrer en prise entre elles, la mise hors de prise du premier élément de verrouillage (70) avec l'élément de pied intérieur (12) provoquant la mise hors de prise du second élément de verrouillage (82) avec ledit élément de pied intérieur (12), **caractérisé en ce que** l'élément de pied intérieur (12) est doté d'une partie de mise en prise pour faciliter la mise en prise entre le second élément de verrouillage (82) et l'élément de pied intérieur (12), ladite partie de mise en prise comprenant une ouverture ou une cavité (42) qui reçoit une partie d'extrémité (84) du second élément de verrouillage (82) quand ce dernier est en prise avec l'élément de pied intérieur (12).

2. Pied réglable (10) selon la revendication 1 **caractérisé en ce que** le second élément de verrouillage (82) est mû de façon élastique pour entrer en prise avec l'élément de pied intérieur (12).

3. Pied réglable (10) selon la revendication 2 **caractérisé en ce que** le second élément de verrouillage (82) est mû de façon élastique par un ressort de compression (86) pour entrer en prise avec l'élément de pied intérieur (12).

4. Pied réglable (10) selon la revendication 3 **caractérisé en ce que** le ressort de compression (86) qui met le second élément de verrouillage (82) en prise avec l'élément de pied intérieur (12) est logé dans un boîtier (52) qui abrite aussi au moins une partie du premier élément de verrouillage (70).

5. Pied réglable (10) selon l'une quelconque des revendications précédentes **caractérisé en ce qu'**une desdites parties pouvant entrer en prise, ou les deux, sont dotées d'une came (88 ou 90) pour se détacher.

6. Pied réglable (10) selon l'une quelconque des revendications précédentes **caractérisé en ce que** ladite partie de mise en prise se trouve à une extrémité de la trajectoire possible de l'élément de pied intérieur (12) par rapport au second élément de verrouillage (82).

7. Pied réglable (10) selon l'une quelconque des revendications précédentes **caractérisé en ce qu'**un ressort de compression (50) orienté longitudinalement est placé à l'intérieur dudit élément de pied extérieur (16) et entre en prise avec ledit élément de pied intérieur (12) de sorte à déplacer ce dernier dans une direction tendant à augmenter la longueur du pied réglable de façon télescopique (10).

8. Article tel qu'une chaise, un lit de camp, une brouette, une table, un conteneur, un chariot ou tout autre article possédant au moins un pied réglable (10) selon l'une quelconque des revendications précédentes.
